# EUROPEAN PATENT APPLICATION

(11) **EP 1 306 907 A1**
(43) Date of publication of application: **02.05.2003**
(21) Application number: 01500258.7
(22) Date of filing: 29.10.2001
(51) Int. Cl.: H01L 31/042

(54) **Low ballast mounting system**

(71) Applicant: BP Solar Espana, S.A., 28108 Alcobendas, Madrid (ES)
(72) Inventor: Diaz, Emilio Mera BP Solar Espana S.A, 28108 Alcobendas, Madrid (ES); Wildman, Eric Peter BP Solar Espana S.A, 28108 Alcobendas, Madrid (ES)
(74) Representative: Smith, Julian Philip Howard

(57) **Abstract**

An assembly typically comprising solar panel modules is disclosed, which is mounted on a surface exposed to wind, and has a panel mounted at an angle to said surface, and means defining a concave surface extending from the top edge of said panel to the surface on which it is mounted, whereby impingement of wind on said concave surface causes a downforce to be applied to the assembly. This arrangement reduces the amount of ballast required to prevent the assembly from blowing away.

## Description

This invention relates to a low ballast mounting system, for use where a flat plate or similar requires to be mounted at an angle relative to a supporting surface without significant fixings. The invention has particular applicability to the mounting of solar panels at an angle to a supporting surface.

Solar panels, such as for example photovoltaic cells, are becoming increasingly important as a source of electricity. In particular, the use of solar panels mounted on the rooves of buildings for the generation of electricity is becoming increasingly widespread.

Many types of solar panel mounting systems are known in the art. For example, solar panels may be added to an existing roof, or they may be incorporated into the original design of a new roof. Where panels are added to an existing roof they are commonly fastened to the existing surface by the use of fixing devices such as bolts which penetrate the surface of the roof. Rupture of the membranes covering a roof by such penetrating fixing devices is generally undesirable, as it may lead to potential leakage problems through the roof.

Alternatively solar panel mounting systems are used which are not fixed to the roof, but instead simply hold the assembly down on the surface using ballast. Sufficient ballast is used to keep the solar modules firmly in place on the roof in the strongest of winds.

Generally solar panels are mounted at an angle such that their surfaces receive the optimum level of solar radiation. Unless the roof surface on which they are mounted is similarly sloping, the panels are consequently fixed at an angle relative to the roof surface. The underside of such a panel, which forms an acute angle with the surface of the roof, can clearly provide significant resistance to a wind blowing from the appropriate direction, and in such circumstances wind-lift can be a major problem. To overcome this, a mounting system relying solely on ballast requires large quantities of ballast.

The requirement for significant ballast can however make solar panel arrays unsuitable for many rooves, particularly many flat rooves, which may have insufficient strength to withstand the weight. There is consequently a need for a more lightweight mounting system with sufficient resistance to wind-lift.

In US 5746839, for example, it is disclosed that the use of deflection plates on the rear of angled solar panels deflects the wind around the panel and reduces the corresponding wind up-lift. However only flat deflection plates, which effectively act as a barrier to the wind reaching the rear underside of the panels, are disclosed.

We have now found that wind uplift can be reduced more effectively by the use of a mounting system which utilises a concave surface to deflect the wind. This is applicable to any assembly comprising a panel mounted at an angle to a surface where wind uplift may be a problem.

Accordingly the present invention provides an assembly mounted on a surface exposed to wind, having a panel mounted at an angle to said surface, and means defining a concave surface extending from the top edge of said panel to the surface on which it is mounted, whereby impingement of wind on said concave surface causes a downforce to be applied to the assembly.

In the present application, "concave surface" means a surface having a concave cross-sectional profile over the majority of its cross-section. It does not exclude surfaces which have a different profile adjacent the edges: for example, the surface may have a convex profile adjacent the edge of the panel to which it is connected, so as to provide a smooth surface across the junction with the panel.

Although wind may of course impinge on the assembly from any direction, the problems of uplift addressed by the present invention only occur when a component of the wind is blowing into the acute angle defined by the panel and the surface on which it is mounted. Accordingly for the sake of clarity the present invention is described in relation to a nominal wind from such a direction, ie one that impinges directly onto the concave surface. In this orientation the edge of the concave surface adjacent the surface on which the assembly is mounted (and remote from the junction with the mounted panel) may be considered as a leading edge, with the mounted panel being leeward and forming a trailing edge.

The mounted panel typically comprises a flat plate or other similar sheet of material, but may be any construction which, when mounted at an angle to its supporting surface, would be expected to have a wind resistance significant enough to cause wind-lift problems. The concave surface also typically comprises a sheet rather than a solid body, in order to minimise weight.

A particular application of the present invention is for mounting panels such as solar panels at an angle on flat rooves without the need for penetrative fastenings to secure the system in place. Equally the invention may be suitable for use in other applications where a tilted panel or plate would benefit from aerodynamically mitigated wind uplift, for example, in the case of portable ramps or jumps.

The leading edge (when the wind is in the direction of concern) of the assembly has a concave profile that generates down-force when impinged by wind. The concave surface preferably has an aerofoil-type profile, for example, a profile known in the art as a NACA [National Advisory Committee on Aeronautics] profile. NACA profiles are well-known in the aeronautical industry, and are frequently used in any application which requires an aerodynamic profile. Although a large series of numbered NACA profiles are publicly available, they can be simplistically defined for the purposes of the present invention in terms of the maximum degree of curvature (in %), and its location along the profile from the leading edge thereof. Preferably the location of the point of maximum curvature of the concave surface is closer to the leading edge of the surface than to the edge adjacent the panel; more preferably, it is located between 20% and 40% along the chord from the leading edge to the edge adjacent the panel. The maximum curvature (or camber) at this point is preferably between 5% and 15%, more preferably between 8% and 12%.

It will be readily apparent that the exact profile of the concave surface utilised in any particular application will vary depending on the angle of mounting of the panel, the wind speed(s) it is required to withstand, and the total size and weight (including ballast) of the assembly. For example, where there is a strong requirement for minimum ballast, such as on a relatively weak roof, then the profile would be designed so as to maximise the downforce. However, where the ballast requirement is not so stringent and more ballast may be used, then the leading edge may not need to create as much down force, and other factors may influence the profile.

Preferably the junction at the edge of the panel and the concave surface is shaped so as to give a smooth cross-sectional profile across the junction, thereby encouraging laminar flow of air across the junction and reducing turbulence. This makes the design more effective at reducing lift. Thus the profile of the concave surface is modified only close to its edge which abuts the panel, so as not to disrupt the aerodynamic shape.

In the case where the invention is a solar panel assembly, the assembly typically comprises an array of individual modules, usually arranged in rows, each comprising a mounted solar panel. The overall assembly is preferably designed so that individual modules interconnect together. This has the advantage that the overall array has greater rigidity and resistance to wind-lift. In such a configuration the array of adjacent individual modules form what is effectively a single elongate solar panel attached to a similarly elongate concave surface. Typically, several of such rows are employed in parallel on a flat roof. In such a case, it is preferred that the elongate panel from one row meets and/or overlaps with the elongate concave surface of the row immediately in front. In this way an extended array is obtained that has a minimum of edges exposed to potential wind uplift.

The concave surface is typically in the form of a rigid sheet. In one embodiment it may contain one or more holes or perforations to allow some airflow into the area underneath the panel and concave sheet. Similarly, in the case where a series of modules are connected together to form a row of panels, the connection may be arranged such that the individual concave surfaces of each module are spaced apart slightly, so as to provide a gap for air to pass through. Permitting the passage of air into the space between the panel and the concave surface allows for equalisation of pressure between the inner and outer surfaces of the assembly, and in the case of mounting systems for solar panels can allow for cooling of the panels.

Modules may be joined in this way to form an array of several typically parallel rows of modules. The size and shape of such an array may be suitably determined to fit within the layout of the area on which the panels are to be mounted, such as, for example the shape of a roof. Other factors may also be considered when determining the size and shape of an array, such as, for example, allowing for suitable access to the modules in the array, for example, for maintenance purposes.

When several modules are connected together in a row, the assembly may include channels under the rows of modules. Such channels may be used to house e.g. electrical components, where they can be sheltered from the elements. For example, where the mounting system is used for a solar panel array, inverters and other electrical components may be housed under the array.

The means for fastening individual modules of the assembly together in a row may comprise any suitable means as known to one skilled in the art. Examples of fixings that can be used include screws with expansion rawlplugs, standard screws and nuts, or metal inserts in plastic. Any fastening plates used may be of any suitable material such as plastics or metal.

It is preferred that any fixers and/or fastener plates used to lock the adjacent mounting modules together are aerodynamically shaped in such a way as to generate a smoother surface to the entire array, reducing the numbers of edges exposed to wind-lift. In particular it is preferred that the fasteners used to secure the edges of each row are also aerodynamically shaped. In this way smooth flow of wind over the entire assembly may be achieved, reducing turbulence and improving the effectiveness of the design in reducing lift.

In the case where the assembly comprises a row of interconnected solar panel modules, and several rows are sited in parallel to form an array, the concave surface and any fasteners of each row may be formed of or coated with a reflective material so as to reflect solar radiation onto the solar panels of the row behind.

A preferred embodiment of the invention is described further with reference to the accompanying drawings, in which:
Figure 1 shows a pair of adjacent modules each comprising a panel and associated concave surface; and
Figure 2 shows an array of parallel rows of the modules of Figure 1;
Figure 3 shows the same view as Figure 2 but from the other side;
Figure 4 shows a concave surface having an NACA profile;
Figure 5 shows a concave surface having a symmetric NACA profile.

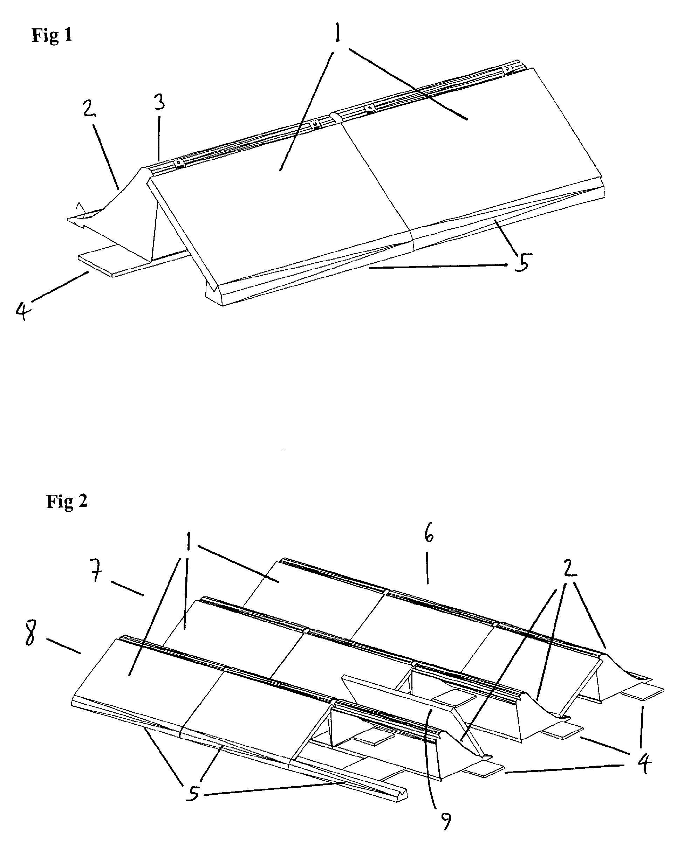

In Figure 1, a pair of connected modules is shown each comprising a panel 1 attached to a respective concave surface 2. In this particular embodiment, the concave surface has a convex portion 3 at its edge adjoining the panel 1 in order to provide a smooth surface across the junction between the two parts. This is to ensure a laminar flow of air across the junction. This embodiment also has connector plates 4 for connecting adjacent modules together.

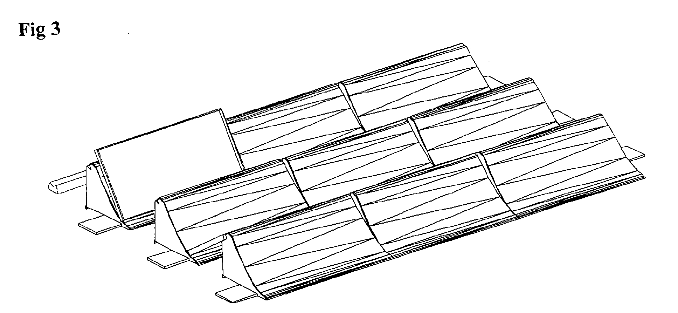

If an array of modules is to be created comprising parallel rows, the panels at the front of the array have further aerodynamically shaped attachments 5 to permit smooth airflow across them from that direction. Figures 2 and 3 show part of such an array, comprising three rows 6, 7, 8 of three modules each. To demonstrate the internal construction, one panel of the array is not shown, and another panel 9 is shown rotated forward. In these Figures the connector plates 4 are again visible. It can be seen how the construction is such that the panels of one row overlap with the concave surfaces of the adjacent row.

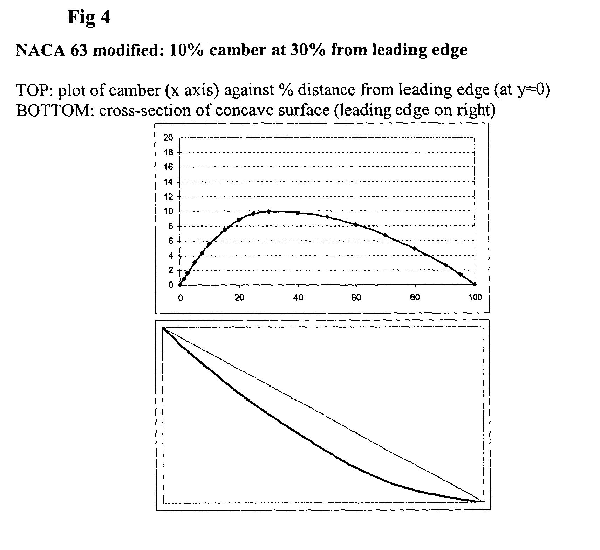

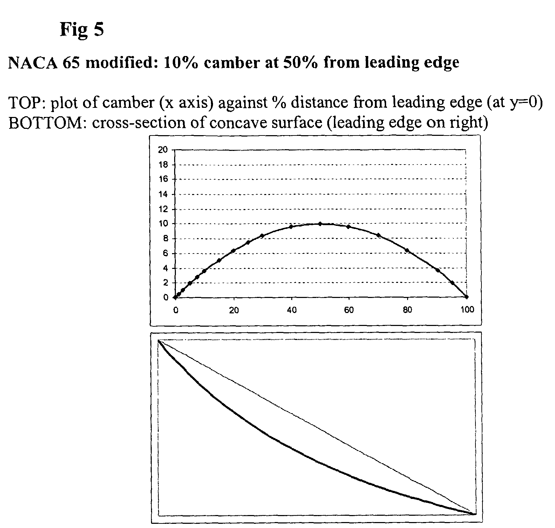

Examples of the profile of the concave surfaces are shown in Figures 4 and 5. These show modified NACA profiles having a maximum camber of 10%, but located at different points along the profile of the surface. It has been found that locating the point of maximum camber closer to the leading edge than the edge adjacent the panel is desirable. In both these theoretical profiles there is no smoothing of the profile at its edge adjacent the edge of the panel (i.e. remote from the leading edge). In practice, this would create a sharp edge at the top of the assembly, leading to turbulent flow and increased uplift. This can be counteracted by smoothing this end of the profile to create a convex portion, which leads smoothly into the adjacent upper surface of the panel.

## Claims

1. Assembly mounted on a surface exposed to wind, having a panel mounted at an angle to said surface, and means defining a concave surface extending from the top edge of said panel to the surface on which it is mounted, whereby impingement of wind on said concave surface causes a downforce to be applied to the assembly.

2. Assembly according to claim 1, wherein said concave surface has an aerofoil-type profile.

3. Assembly according to claim 2, wherein said concave surface has a NACA profile.

4. Assembly according to claim 3, wherein the location of the point of maximum curvature of the concave surface is closer to the leading edge of the surface than to the edge adjacent the panel.

5. Assembly according to claim 4, wherein the point of maximum curvature of the concave surface is located between 20% and 40% along the chord from the leading edge to the edge adjacent the panel.

6. Assembly according to claim 4 or 5, wherein the maximum curvature (or camber) of the concave surface is between 5% and 15%.

7. Assembly according to claim 6, wherein the maximum curvature of the concave surface is between 8% and 12%.

8. Assembly according to any preceding claim, wherein the junction of the edge of the panel and the concave surface is shaped so as to give a smooth cross-sectional profile across the junction.

9. Assembly according to any preceding claim, wherein the panel is a solar panel.

10. Assembly according to claim 9, which comprises an array of individual modules, each comprising a mounted solar panel, which modules are linked together so as to form an elongate row of solar panels joined to a corresponding elongate concave surface.

11. Assembly according to claim 10, which comprises a series of parallel rows of linked modules, wherein the elongate panel from one row meets and/or overlaps with the elongate concave surface of the row immediately in front.

12. Assembly according to claim 10 or 11, wherein the concave surface is in the form of a rigid sheet, containing one or more holes or perforations so as to allow airflow into the area underneath the panel and concave sheet.

13. Assembly according to any of claims 10 to 12, wherein the linked modules are arranged such that the individual concave surfaces of each module are spaced apart, so as to provide a gap for air to pass through.
